# EUROPÄISCHE PATENTANMELDUNG

(11) **EP 0 542 282 A1**
(43) Veröffentlichungstag der Anmeldung: **19.05.1993**
(21) Anmeldenummer: 92119390.0
(22) Anmeldetag: 12.11.1992
(51) Int. Cl.: F16F 9/44

(54) **Schwingungsdämpfer**

(30) Priorität: 12.11.1991 DE 4137176
(71) Anmelder: INDUSTRIEANLAGEN-BETRIEBSGESELLSCHAFT M.B.H., D-85521 Ottobrunn (DE)
(72) Erfinder: Höbel, Rudolf, W-8011 Peiss/Aying (DE); Hufnagl, Johannes, W-8011 Peiss/Aying (DE)
(74) Vertreter: Bohnenberger, Johannes, Dr.

(57) **Zusammenfassung**

Üblicherweise ist das Dämpfungssystem eines Fahrzeugs entsprechend den konstruktiven Auslegungen für die gesamte Lebensdauer festgelegt. Es wird vorgeschlagen, für höherwertige Fahrzeuge, insbesondere für Hochleistungsfahrzeuge, von außen einstellbare Ventile (4, 5, 6, 17) vorzusehen, mittels derer die Dämpfungscharakteristik des Schwingungsdämpfers frei einstellbar ist.

## Beschreibung

Die Erfindung betrifft einen Schwingungsdämpfer nach dem Oberbegriff des Patentanspruchs 1.

Insbesondere handelt es sich hier um einen hydraulischen Schwingungsdämpfer, wie er (als Teleskopstoßdämpfer) in Kraftfahrzeugen, aber auch bei Flugzeugen (insbesondere bei deren Fahrgestellen) sowie zum Dämpfen von Maschinenbewegungen Verwendung findet.

Schwingungs- bzw. Stoßdämpfer dienen bei Fahrzeugen in Verbindung mit der Federung dazu, die durch Straßenunebenheiten verursachten Stöße oder Schwingungen soweit wie möglich in gesteuerter Weise wegzudämpfen. Der Zweck ist es, möglichst wenig Fahrbahnimpulse an die abgefederte Masse des Fahrzeugs wenig Fahrbahnimpulse an die abgefederte Masse des Fahrzeugs (Rahmen, Chassis, Karosserie) weiterzugeben, jedoch ohne daß die Räder die Bodenhaftung verlieren.

Die Forderungen an die Betriebscharakteristik von Dämfpungssystemen variieren stark entsprechend den unterschiedlichen Anwendungsbereichen, die von (weich gefederten) Komfortwagen zu (harten) Rennsportfahrzeugen reicht. Innerhalb eines Anwendungsbereichs, z.B. bei Tourensportwagen, werden die Anforderungen an das Dämpfungssystem bestimmt durch Art und Beschaffenheit der Pisten, aber auch von fahrzeugseitigen Parametern wie Fahrzeugmasse, Massenverteilung, Radaufhängung, Bereifung und vieles andere mehr bis hin zur Außen- und Betriebstemperatur, die insbesondere die Ölviskosität beeinflußt.

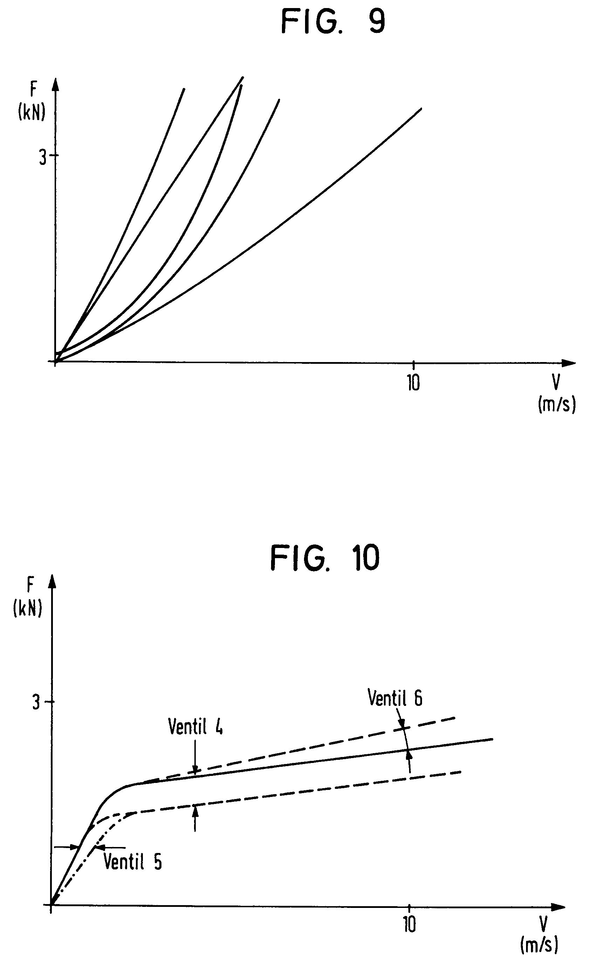

Die Dämpfungschrakteristik eines Schwingungsdämpfungssystems wird üblicherweise in einem Dämpfungs-Kennlinien-Diagramm beschrieben. Fig. 9 zeigt beispielhaft lineare und progressive Zusammenhänge zwischen der Einfederungsgeschwindigkeit v (m/s) und der dazugehörigen Druckdämpfungskraft F(kN), wie sie für einfache Anwendungen üblich sind. Schwingungsdämpfungssysteme mit derartiger Dämpfungscharakteristik sind aber nur sehr bedingt für Hochleistungsfahrzeuge (bzw. -fahrgestelle) verwendbar.

Üblich sind Schwingungsdämpfer, bei denen ein Kolben in einem zylindrischen Rohr in Öl laufend sowohl Druck- wie auch Zugkräfte (Druck- und Zugstufe) dämpft, indem bei Stoßbelastungen durch eine Bohrung Öl fließt, wodurch der Druck- bzw. Zugimpuls abgebaut wird. Eine weitere Funktion neben der Dämpfung beim Einfedern (Druckstufe) und beim Ausfedern (Zugstufe) ist die Federung selbst, die üblicherweise durch Federelemente oder durch Luftpolster erfolgt.

Aus der DE-A 32 14 599 ist ein derartiger Stoßdämpfer bekannt, bei welchem die Bohrung über Federelemente abgeschlossen ist. Die so erzielbaren Dämpfungskennlinien hängen damit von der Steifigkeit der verwendeten Federelemente ab.

Aus der DE-U 19 67 943 ist es bekannt, daß man zusätzlich zu einer festen Bohrung ein Ventil anbringen kann, das ab einer bestimmten Geschwindigkeit v einen zusätzlichen Querschnitt für den Ölfluß freigibt.

Eine ähnliche Anordnung ist aus der DE-A 35 44 474 C1 bekannt. Dort wird ein federbelasteter Ventilkörper beschrieben, der aufgrund seiner speziellen Konusform eine besondere Kennlinie im Übergangsbereich von niedrigen zu hohen Einfederungsgeschwindigkeiten ermöglicht.

Die vorgenannten Dämpfungssysteme sind in ihren Kennlinien entsprechend den konstruktiven Auslegungsdaten für die gesamte Lebensdauer festgelegt, von Verschleißeffekten abgesehen. Dies heißt, daß die auf die mittleren erwarteten Betriebsbedingungen ausgelegte Dämfpungscharakteristik konstant ist und nur mit erheblichem Aufwand (durch Einbau ganz anderer Systeme) geändert werden kann. Bei höherwertigen Fahrzeugen, insbesondere bei Hochleistungsfahrzeugen, wie sie eingangs beschrieben wurden, wird jedoch gefordert, daß die Dämpfungscharakteristik flexibel auf die jeweiligen Einsatzbedingungen abgestimmt werden kann.

Der Erfindung liegt die Aufgabe zugrunde, einen Schwingungsdämpfer der eingangs genannten Art dahingehend weiterzubilden, daß seine Dämpfungscharakteristik in einfacher Weise den vorgegebenen Bedingungen anpaßbar ist, ohne dabei die ungefederten Massen wesentlich zu erhöhen.

Diese Aufgabe wird durch die im Kennzeichen des Anspruchs 1 angegebenen Merkmale gelöst.

Ein wesentlicher Punkt der Erfindung liegt darin, daß Einstelleinrichtungen vorgesehen sind, über welche die Kraft, mit der die Feder den Ventilkörper in Richtung auf den Ventilsitz (bei durchströmtem Ventil) beaufschlagt, von außen, also ohne Austausch des Schwingungsdämpfers einstellbar ist. Dadurch kann in sehr einfacher Weise jedes Fahrzeug auf sich ändernde Gegebenheiten angepaßt werden.

Vorzugsweise umfaßt der Ventilkörper einen konischen Abschnitt und (an die Seite des größeren Durchmessers angrenzend angesetzt) einen zylindrischen Abschnitt, dessen Durchmesser geringer ist als der des Ventilsitzes. Im Ruhezustand liegt somit der Ventilkörper mit seinem zylindrischen Abschnitt innerhalb des Ventilsitzes. Durch die Durchmesserunterschiede zwischen dem zylindrischen Abschnitt und dem Ventilsitz ist also eine Durchflußöffnung definiert, die von Anfang an (also bei V = 0) wirksam ist. Steigt die Durchflußgeschwindigkeit v und bewegt sich somit der Ventilkörper, so bleibt aufgrund des zylindrischen Abschnitts zunächst der Durchflußquerschnitt gleich. Erst bei höheren Geschwindigkeiten v wird der konische Abschnitt des Ventilkörpers wirksam, so daß dann der durchströmbare Querschnitt steigt.

Vorzugsweise gestaltet man den Ventilkörper und/oder die Feder auswechselbar. Hierbei werden "Einbausätze" verwendet, welche farblich gekennzeichnet sind, so daß man schon von außen sehen kann, welcher Ventilkörper bzw. welche Feder eingesetzt ist, so daß die Dämpfungscharakteristik des Systems von außen erkennbar wird.

Bei einer bevorzugten Ausführungsform der Erfindung ist der Ventilkörper gleitverschieblich auf einem Ventilzapfen angeordnet, der einen Federsitz trägt. Auf dem Federsitz sitzt die Feder mit einem Ende auf, mit ihrem anderen Ende liegt sie auf dem Ventilkörper auf. Der Ventilzapfen ist in Richtung auf den Ventilkörper vorzugsweise über ein Gewinde verstellbar. Dadurch kann bei einem Ventil, dessen Ventilkörper im Ruhezustand auf dem Ventilsitz unter Kontakt aufliegt, der Punkt bestimmt werden, ab welchem das Ventil eine Öffnung freigibt. Wenn das oben beschriebene Ventil mit einem konischen und einem zylindrischen Abschnitt verwendet wird, welches von Anfang an einen gewissen Durchflußquerschnitt freigibt, so bestimmt die Einschraubtiefe den Punkt (bezüglich v), bei welchem der Strömungsquerschnitt zu steigen beginnt. Weiterhin wird dadurch gleichzeitig die Kennlinie in diesem Bereich hoher Strömungsgeschwindigkeiten v mitbestimmt.

Bei einer anderen bevorzugten Ausführungsform der Erfindung ist der Ventilkörper als Steuernadel ausgebildet, welche in Richtung auf den Ventilsitz (ebenfalls vorzugsweise über ein Gewinde) verstellbar ist. Der Ventilsitz ist in diesem Fall gleitverschieblich von der Feder beaufschlagt gehalten. Hier liegt also eine kinematische Umkehr zu der zuvor gezeigten Ausführungsform der Erfindung zugrunde, die sich besonders für den Fall eignet, in welchem das Ventil im Kolben ausgebildet ist. Man kann dann die Steuernadel durch die gesamte Länge des Kolbens nach außen führen.

Alternativ oder zusätzlich wird bei einer bevorzugten Ausführungsform ein Bypass-Ventil zum vorbeschriebenen Ventil vorgesehen, welches einen von außen einstellbaren Strömungsquerschnitt aufweist. Dieses Ventil stellt somit eine reine Drosselbohrung dar und ist insbesondere für den Fall bevorzugt einzusetzen, in welchem das Ventil im Ruhezustand durch Eingriff des Ventilkörpers mit dem Ventilsitz vollständig schließt.

Bei einer weiteren besonders bevorzugten Ausführungsform der Erfindung ist zur Einstellung des Dämpfungskraftverlaufs im Bereich großer Einfederungsgeschwindigkeiten ein Drosselventil in Serie zum vorgenannten Ventil bzw. zur Baugruppe bestehend aus dem vorgenannten Ventil und dem dazugehörigen Bypass-Ventil vorgesehen. Dieses - hydraulisch gesehen - seriell angeordnete Drosselventil stellt ein - kräftemäßig - parallel geschaltetes Dämpfungsglied dar. Besonders vorteilhaft hierbei ist der Umstand, daß die Dämpfungseigenschaften in bezug auf große Einfederungsgeschwindigkeiten nahezu unabhängig von den Dämpfungseigenschaften bei niedrigen Einfederungsgeschwindigkeiten einstellbar sind.

Alternativ hierzu kann ein weiterer Dämpfer mit einem zweiten Kolben bzw. zweiten Zylinder parallel zum ersten Dämpfer (mit seinen Ventilen) mit diesem Drosselventil zur Einstellung des Dämpfungskraftverlaufs im Bereich großer Einfederungsgeschwindigkeiten vorgesehen sein. Diese Ausführungsform eignet sich besonders für Motorräder, bei welchen einem Rad zwei Dämpfer zugeordnet sind. Diese Ausführungsform der Erfindung ist besonders kostengünstig und einfach.

Zur Einstellung der Ventile sind vorzugsweise Skalen zum Ablesen des Einstellstandes neben den farblichen oder schriftbildlichen Kennzeichnungen für den Ventiltyp vorgesehen.

Das oben beschriebene Ventil, dessen Dämpfungseigenschaften über die Steuernadel einstellbar sind, ist insbesondere für die Zugstufe geeignet, während die übrigen Ventile vorzugsweise in der Druckstufe angebracht werden.

Bevorzugte Ausführungsformen der Erfindung ergeben sich aus den Unteransprüchen sowie der nachfolgenden Beschreibung anhand von Abbildungen. Hierbei zeigen:
- Fig. 1: eine erste Ausführungsform der Erfindung mit einem Doppel-Stoßdämpfersystem,
- Fig.2-5: Detaildarstellungen entsprechend den Ausschnitten II-V aus Fig. 1,
- Fig. 6: Kennlinien zur Ausführungsform der Erfindung nach Fig. 5,
- Fig. 7: eine modifizierte Ausführungsform der Erfindung betreffend das in Fig. 4 gezeigte Ventil,
- Fig. 8: die Darstellung eines Doppel-Stoßdämpfersystems ähnlich dem nach Fig. 1,
- Fig. 9: Kennlinien von herkömmlichen Stoßdämpfersystemen und
- Fig. 10: Kennlinien eines Stoßdämpfersystems nach Fig. 1.

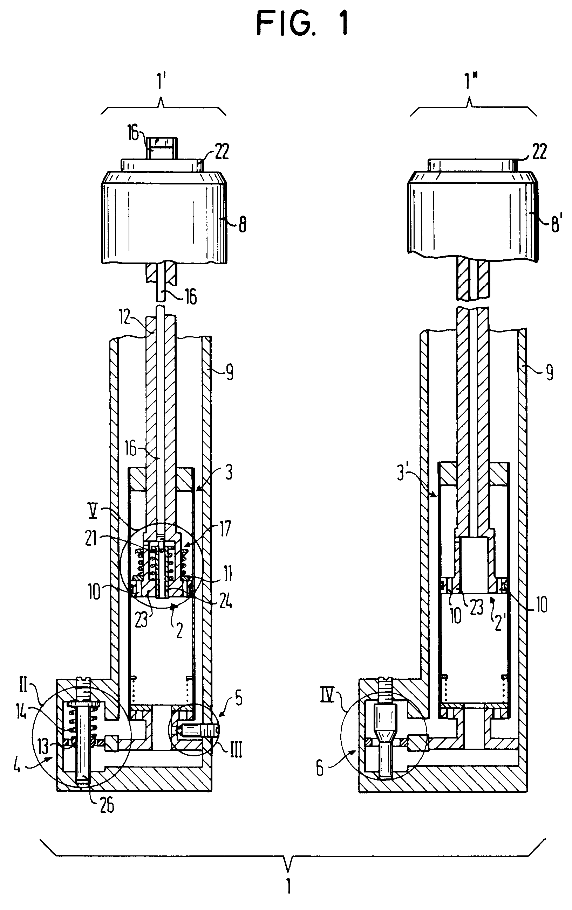

Der in Fig. 1 gezeigte Schwingungsdämpfer 1 umfaßt einen ersten Teleskopstoßdämpfer 1' und einen zweiten Teleskopstoßdämpfer 1''. Diese gehören zu einem ersten Federbein 8 bzw. einem zweiten Federbein 8', welche z.B. beim Vorderrad eines Motorrads (oder auch beim Hinterrad) Anwendung finden können.

Der Teleskopstoßdämpfer 1' umfaßt einen Kolben 2, der in einem ölgefüllten Zylinder 3 in an sich bekannter Weise verschiebbar aufgenommen ist. Außenseitig wird die Anordnung von einem Dämpferholm 9 umschlossen.

Im unteren Bereich des Dämpferholms 9 sind ein erstes Ventil 4 zum Einstellen der Grundhärte und ein zweites Ventil 5, das als Bypass-Ventil zum ersten Ventil 4 angeordnet ist, zum Einstellen der Dämpfung bei niedrigen Einfederungsgeschwindigkeiten vorgesehen.

Der Teleskopstoßdämpfer 1'' weist ebenfalls einen Zylinder 3' sowie einen Kolben 2' auf, in dessen Kolbenplatte 23 feste Bohrungen 10 vorgesehen sind. Der Dämpfer 1'' weist weiterhin ein Ventil 6 auf, welches von außen einstellbar ist, wobei über dieses Ventil 6 der Dämpfungskraftverlauf im Bereich großer Einfederungsgeschwindigkeiten einstellbar ist. Bei der hier gezeigten Anordnung liegt der Teleskopstoßdämpfer 1'' kräftemäßig parallel zum Teleskopstoßdämpfer 1', was einer hydraulischen Serienschaltung des Ventils 4 (mit dem Bypass-Ventil 5) zum Ventil 6 entspricht.

Im Kolben 2 des Teleskopstoßdämpfers 1' ist ein Ventil 17 zum Einstellen des Dämpfungsverhaltens in der Zugstufe vorgesehen, zu welchem in hydraulischer Parallelschaltung ein weiteres Ventil sitzt, das durch Bohrungen 10 mit darauf liegender, federbelasteter Ventilplatte 11 definiert ist. Das Ventil 17 stellt ein viertes einstellbares Ventil dar, welches durch eine Steuernadel 16 ebenfalls von außen einstellbar ist. Dies wird ebenfalls weiter unten näher erläutert.

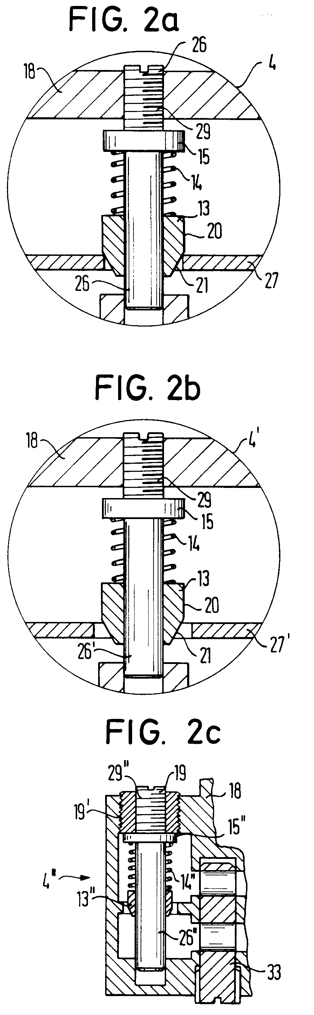

Das in Fig. 2a näher gezeigte Ventil 4 umfaßt einen Ventilzapfen 26, der über ein Gewinde 29 in einem Ventilhalter 18, der am Dämpferholm 9 angebracht ist, gehalten ist. Der Ventilzapfen 26 weist weiterhin einen Federsitz 15 auf, auf welchem sich eine Feder 14 mit ihrem einen Ende abstützt. Mit ihrem anderen Ende liegt die Feder 14 auf der Hinterseite eines Ventilkonus 13 auf, der an seinem vorderen Ende einen konischen Abschnitt 21 trägt. Mit diesem konischen Anschnitt 21 sitzt der Ventilkonus 13 in der Bohrung einer Durchflußscheibe 27, welche somit einen Ventilsitz bildet. Zwischen dem konischen Abschnitt 21 und dem hinteren Ende des Ventilkonus 13 ist ein zylindrischer Abschnitt 20 vorgesehen.

Bei dieser Ausführungsform des Ventils 4 tritt eine Durchströmung erst bei einem Druck auf, der ausreicht, den Ventilkonus 13 gegenüber der Kraft der Feder 14 aus seinem Sitz auf der Durchflußscheibe 27 abzuheben. Dieser Punkt kann durch tieferes Einschrauben des Ventilzapfens 26 zu höheren Werten hin verschoben werden, indem die Feder 14 stärker vorgespannt wird. Die Wirkung der Einstellung des Ventils 4 ist in Fig. 10 angedeutet.

Die in Fig. 2b gezeigte Ausführungsform des Ventils 4' unterscheidet sich von der nach Fig. 2a dadurch, daß der zylindrische Abschnitt 20 einen geringeren Durchmesser hat als die Bohrung in der Durchflußscheibe 27'. Dadurch entsteht im stationären Zustand des Dämpfers ein Ringspalt zwischen dem zylindrischen Teil 20 des Ventilkonus 13 und der Öffnung in der Durchflußscheibe 27'. Somit ist eine Art Bypass-Ventil gebildet, das den Dämfpungskraftverlauf im Bereich niedriger Einfederungsgeschwindigkeiten bestimmt.

Die in Fig. 2c gezeigte Ausführungsform der Erfindung unterscheidet sich von denjenigen nach den Figuren 2a und 2b dadurch, daß das Ventil 4'', welches wieder aus einem Ventilzapfen 26'' mit darauf befindlichem Ventilkonus 13'', Feder 14'' und Federsitz 15'' besteht, vollständig aus dem Ventilhalter 18 herausgenommen werden kann. Um dies zu erreichen, ist der Ventilzapfen 26'' mit seinem Gewinde 29'' in einen Einschraubhalter 19 eingeschraubt, der wiederum über ein Gewinde 19' in den Ventilhalter 18 eingeschraubt ist. Um beim Auswechseln des Ventils 4'' Ölverlust zu vermeiden bzw. zu minimieren, ist eine Absperreinrichtung 33 vorgesehen, welche den Raum, in welchem sich das Ventil 4'' befindet, vom übrigen Innenraum des Systems abtrennen kann.

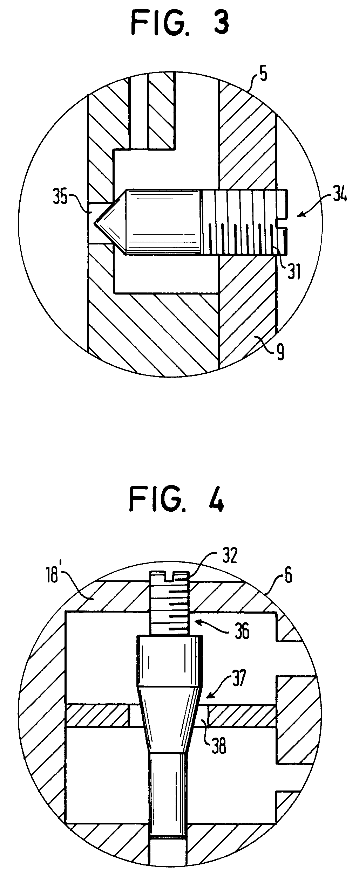

Bei der in Fig. 1 gezeigten Ausführungsform der Erfindung ist (hydraulisch) parallel zum Ventil 4 das Bypass-Ventil 5 vorgesehen. Dieses ist in Fig. 3 im Detail gezeichnet. Dieses Bypass-Ventil 5 weist eine von außen einstellbare Ventilnadel 34 auf, die über ein Gewinde 31 im Dämpferholm 9 gehalten ist. Die Ventilnadel 34 weist ein konisches Vorderende auf, welches eine Bohrung 35 je nach Einschraubtiefe mehr oder weniger freigibt.

Das im zweiten Teleskopstoßdämpfer 1' angebrachte Ventil 6 ist in Fig. 4 näher gezeigt. Dieses umfaßt eine über ein Gewinde 32 in einem Ventilhalter 18' angebrachte Ventilnadel 36 mit einem Konus 37, der in eine Bohrung 38 ragt. Je nach Einschraubtiefe der Ventilnadel 36 (über ihr Gewinde 32) wird die Bohrung 38 mehr oder weniger durch den Konus 37 verschlossen. Mittels des Ventils 6 wird die Durchströmung und damit der Dämpfungskraftverlauf im Bereich hoher Einfederungsgeschwindigkeiten eingestellt (siehe Fig. 10).

Die Ventile 4, 5 und 6 sind vorteilhafterweise als vorgefertigte Ventilpatronen ausgestaltet, um durch Einpressen oder Einschrauben (siehe Fig. 2c) in entsprechende Aufnahmebohrungen des jeweiligen Dämpferzylinders bzw. Ventilhalters eine rationelle Serienfertigung zu ermöglichen. Je nach Dämpfertyp und Einsatzzweck können für jedes Ventil 4, 5 und 6 jeweils Ventilpatronen mit abgestuft unterschiedlichen Durchflußkennwerten (Leistungsklassen) zum Einsatz kommen. Die Ventilpatronen 4, 5 und 6 werden so ausgeführt, daß ein Verwechseln untereinander bei der Montage ausgeschlossen ist, z.B. durch unterschiedliche Durchmesser. jedes Ventil weist durch unverwechselbare Kennzeichnung (z.B. Farbmarkierungen) seinen Typ und seine Leistungsklasse aus.

Im Gegensatz zu Dämpfern aus der Großserie mit eingepreßten Ventilpatronen werden bei Dämpfern für Sport- und Hochleistungsfahrzeuge die Ventile 4, 5 und 6 als auswechselbare Ventileinsätze ausgebildet (siehe Fig. 2c), um über den Einstellbereich der momentan eingebauten Ventile hinaus erweiterte Einstellbereiche durch Ventile anderer Leistungsklassen zu ermöglichen.

Im folgenden wird der druckseitige Ablauf unter Einbeziehung der Ventile 4, 5 und 6 näher erläutert.

Das Ventil 4 dient zur Einstellung der Grundhärte, das dazu parallel liegende Drosselventil 5 zur Einstellung des Ansprechverhaltens. Das in Serienanordnung liegende Ventil 6 dient zum Einstellen des Einfederungsverhaltens im Bereich hoher Einfederungsgeschwindigkeiten.

Ein von einer Fahrbahnunebenheit eingeleiteter Stoß bewirkt ein Einfedern des Dämpferholms 9 mit einer Anfangsgeschwindigkeit V_{A}. Das Dämpferöl fließt durch die Bohrung 10 nach oben. Bei stärkeren Stoßimpulsen wird der federbelastete Ventilkonus 13 im Ventil 4 einen zusätzlichen Querschnitt freigeben, wobei dieser Querschnitt über eine genau festgelegte Konusform in Abhängigkeit von der Einfederung steuerbar ist. Vorzugsweise ist das Ventil 4 derart auswechselbar, daß mehrere Ventilkonusse 13 mit unterschiedlichen Konusformen und Federn 14 unterschiedlicher Härte einsetzbar sind. Der Ventilkonus 13 und die Feder 14 sollen hierbei leicht und ohne Demontage des Federbeins ausgewechselt werden können. Die Vorspannung der Feder 14 kann einfach von außen eingestellt werden.

Bei der in Fig. 2a gezeigten Ausführungsform der Erfindung liegt im Ruhezustand der Konus 13 auf der Durchflußscheibe 27 auf, so daß der Ölstrom erst nach Überwinden der durch Drehen des Ventilzapfens 26 (der durch das Gewinde 29 axial verschoben wird) einstellbaren Federvorspannung fließt. Bei der anderen, in den Figuren 2b und 2c gezeigten Ausführungsform wird durch Drehen des Ventilzapfens 26' bzw. 26'' die Federvorspannung, die beim Austritt des Konus 13 aus der Durchflußscheibe 27 auftritt, beeinflußt.

Das Bypass-Ventil 5 ermöglicht es, einen wirksamen Querschnitt zusätzlich zum Ventil 4' oder 4'' oder auch zum Ventil 4 freizugeben. Damit ist es möglich, das Ansprechverhalten des Ventils 4 einzustellen. Der wirksame Bypass-Querschnitt des Ventils 5 ist ebenfalls leicht von außen einstellbar.

Das Ventil 6, das in Fig. 4 gezeigt ist, dient zum Einstellen des schnellen Einfederverhaltens und unterscheidet sich vom Ventil 5 trotz prinzipieller Ähnlichkeiten bezüglich der Funktion und Wirkungsweise wegen der Wirkungsanordnung "in Serie zu 4 und 5" grundlegend. Das Ventil 5 bildet mit dem Ventil 4 eine in sich selbständige Funktionseinheit. Das Ventil 6 hingegen wirkt zusätzlich zu der kombinierten Funktionseinheit von Ventil 5 und Ventil 4. Das Ventil 6 drosselt nämlich den Ölstrom bei hohen Einfederungsgeschwindigkeiten mit einem im Betrieb fixen, jedoch stufenlos veränderbaren Querschnitt.

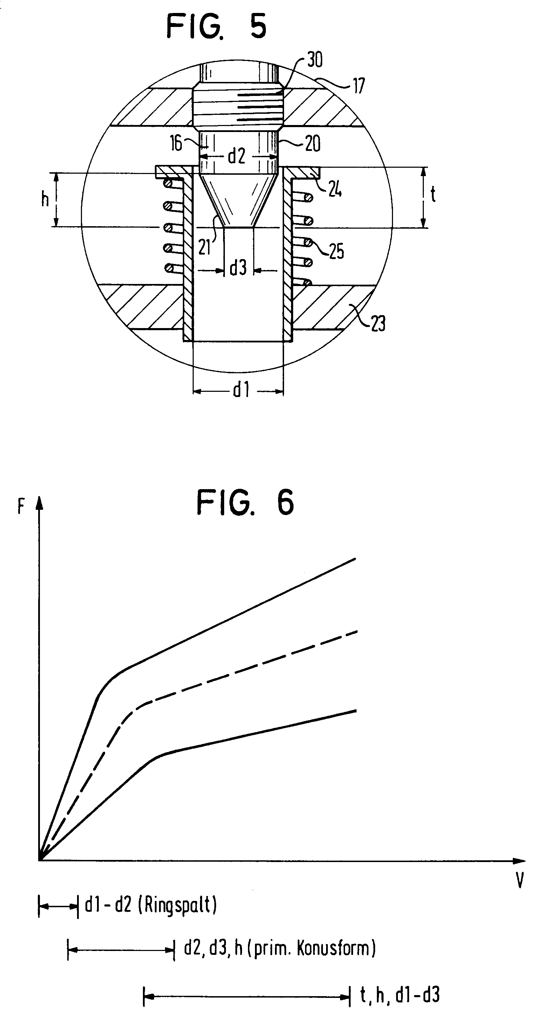

Prinzipiell lassen sich alle druckseitigen Regel- und Einstellelemente auch zugseitig realisieren. Aus Kosten-, Gewichts- und Platzgründen werden bei einer bevorzugten Ausführungsform der Erfindung einfachere Lösungen geboten. Eine solche ist anhand von Fig. 5 dargestellt.
in der Kolbenplatte 23 ist das einstellbare Ventil 17 vorgesehen, bei welchem eine, von einer Feder 25 gegen die Kolbenplatte 23 vorgespannt gehaltene Hülse 24 durch die Strömungskräfte des Öls bei Zug gegenüber der Steuernadel 16 verschoben wird.

Die Steuernadel 16 ist über ein Gewinde 30 gehalten und an ihrem unteren Ende mit einem konischen Abschnitt 21 und einem darüber liegenden zylindrischen Abschnitt 20 versehen. Der Durchmesser des zylindrischen Abschnitts 20 ist in Fig. 5 mit d2 bezeichnet, der Durchmesser am schlanken Ende des Konus 21 ist mit d3 bezeichnet. Der Innendurchmesser der Hülse 24 ist in Fig. 5 mit d1 bezeichnet. Die Länge des Konus ist mit h angegeben, während die Eintauchtiefe des konischen Abschnitts in den Innenraum der Hülse 24 mit t bezeichnet ist.

Der Durchfluß wird bei konstantem Innendurchmesser der Hülse 24 vom Durchmesser der Steuernadel 16, von ihrer Einschraubtiefe t und von der Konusform bestimmt. Die Steuernadel 16 kann in ihrer Tiefe t in Bezug auf die Hülse 24 von außen durch Drehen (und damit durch Verstellung im Gewinde 30) ohne Öffnen des Stoßdämpfers verändert werden. Die Einstelltiefe der Steuernadel 16 in Verbindung mit der Form des konischen Abschnitts 21 bestimmt den Öldurchfluß beim Ausfedern. Eine entsprechende Schar von Kennlinien ist in Fig. 6 angegeben.

Das Auswechseln der Steuernadel 16 erfolgt vorzugsweise ohne Ausbau des Teleskopstoßdämpfers 1 durch Öffnen einer dort vorgesehenen Verschlußkappe 22. Die eingesetzte Steuernadel 16 wird, ohne daß die Ölbefüllung davon beeinflußt wird, herausgeschraubt, und eine andere (farblich vorzugsweise markierte) Steuernadel 16 mit einer anderen Form des konischen Abschnitts 21 wird eingeschraubt.

Die veränderbaren wirksamen Parameter sind zugstufenseitig der Durchmesser d2 der Steuernadel, die Einstelltiefe t in bezug zur Hülse 24 sowie die Konusform. Diese Parameter beeinflussen die zugstufenseitigen Kennlinienverläufe, wie in Fig. 6 angegeben.

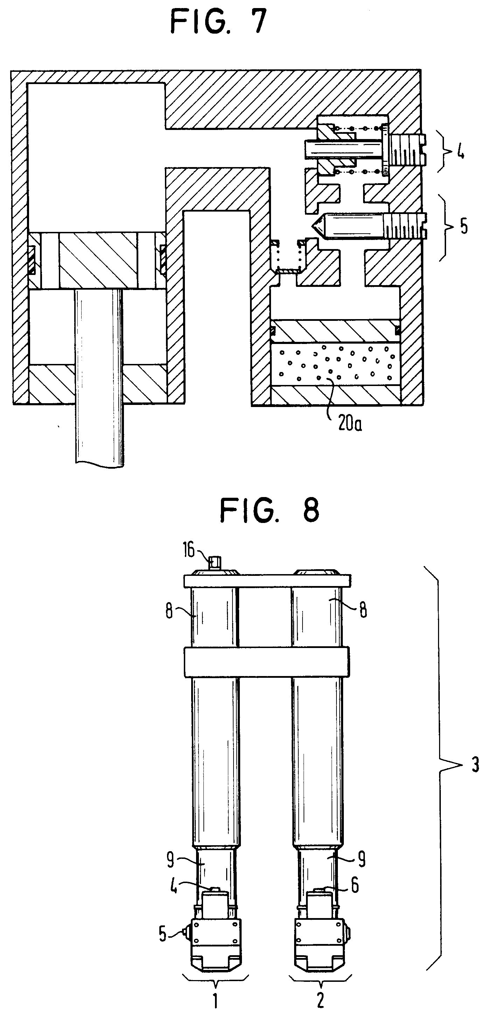

Der hier gezeigte erfindungsgemäße Schwingungsdämpfer kann in bekannten Kombinationen mit einem federnden Element, wie z.B. einer Schraubenfeder oder einem Luftpolster (siehe Fig. 7) als Einheit geliefert und montiert werden. Die übliche Einsatzform wird der Einholmdämpfer mit den Ventilen 4, 5, 6 und 17 sein. Bei geringeren Anforderungen können vereinfachte Ausführungen sinnvoll sein, z.B. solche, welche nur mit den Ventilen 4, 5 und 17 ausgestattet sind.

Beim Einbau in die radführende Baugruppe beim Pkw ist darauf zu achten, daß der Stoßdämpfer am oberen Ende konstruktiv so ausgebildet ist, daß die Steuernadel 16 auch nach Einbau des Stoßdämpfers noch ausgewechselt oder zumindest kontrolliert eingestellt werden kann. Das gleiche gilt beim Einbau als Feder-/Dämpferelement für das Hinterrad von Motorrädern.

Beim Vorderrad von Motorrädern der gehobenen Leistungsklasse werden die beiden Holme mit der Dämpfung/Federung in der Regel symmetrisch mit den Ventilen 4, 5, 6 und 17 ausgerüstet. Zur Verringerung der Kosten wie auch zur Massenreduzierung kann eine asymmetrische Anordnung der Ventile sinnvoll sein, wie dies in Fig. 1 gezeigt ist. Man kann auch einen Stoßdämpfer nur mit den Ventilen 4, 5 und 17, den anderen mit den Ventilen 6 und 17 ausrüsten. Die gewünschte Wirkung ergibt sich dann erst im abgestimmten Zusammenwirken aller Elemente. Tatsächlich beweisen Tests bei genügend starrer Radachse und Achsaufhängung das einwandfreie Funktionieren eines solchen asymmetrischen Systems.

Aus optischen Gründen oder zur Ausnutzung von Preisvorteilen bei Großserienteilen kann es sinnvoll sein, ein Federbein mit den Ventilen 4, 5 und 17 und ein zweites mit den Ventilen 6 und 17 parallel in das radführende Element einzubauen, z.B. bei Motorrädern mit einseitiger Hinterradaufhängung.

In Fig. 8 ist nochmals eine Ausführungsform angegeben, bei welcher die Ventile 4, 5 und 6 asymmetrisch auf die Federbeine des Vorderrads eines Motorrads verteilt sind.

Bei einer weiteren (hier in den Abbildungen nicht gesondert gezeigten) bevorzugten Ausführungssform der Erfindung sind die Ventile 4, 5, 6 und 17 mittels an sich bekannter Übertragungselemente z.B. vom Armaturenbrett eines Kraftfahrzeugs außen verstellbar. Ferner ist es von Vorteil, wenn der Einstellzustand der Ventile zahlenmäßig abgelesen werden kann. Bei Drehwinkeln unter 360° sind Skalen zweckmäßig. Bei größeren Drehwinkeln sind Skalierungen der Einstelltiefe vorzuziehen.

Lediglich der Vollständigkeit halber sei erwähnt, daß die Fig. 7 das Prinzip eines an sich bekannten Gasdruckstoßstämpfers zeigt, bei welchem ein Gaspolster 20 vorgesehen ist.

### Bezugszeichenliste

- 1: Teleskopstoßdämpfer
- 2: Kolben
- 3: Zylinder
- 4: erstes Ventil (Grundhärte)
- 5: zweites Ventil (Bypass-Ventil für niedrige Einfederungsgeschwindigkeiten
- 6: drittes Ventil (für hohe Einfederungsgeschwindigkeiten)
- 8, 8': erstes/zweites Federbein
- 9: Dämpferholm
- 10: Bohrung
- 11: Ventilplatte
- 12: Kolbenstange
- 13: Ventilkonus
- 14: Feder
- 15: Federsitz
- 16: Steuernadel
- 17: einstellbares Ventil
- 18: Ventilhalter
- 19: Einschraubhalter
- 20: zylindrischer Abschnitt
- 21: konischer Abschnitt
- 22: Verschlußkappe
- 23: Kolbenplatte-Halterung
- 24: Hülse
- 25: Feder
- 26: Ventilzapfen
- 27: Durchflußscheibe
- 28: Stift
- 29-32: Gewinde
- 33: Absperreinrichtung
- 34: Ventilnadel
- 35: Bohrung
- 36: Ventilnadel
- 37: Konus
- 38: Bohrung

## Patentansprüche

1. Schwingungsdämpfer, insbesondere Fahrzeug-Teleskopstoßdämpfer, umfassend
mindestens ein hydraulisches System mit einem ersten Kolben (2) und einem ersten Zylinder (3) sowie mindestens ein Ventil (4, 17), das bei Bewegung des Kolbens (2) im Zylinder (3) von verdrängtem Hydraulikfluid durchströmbar angeordnet ist, wobei das Ventil (4, 17) einen Ventilkörper (13; 16), einen Ventilsitz (27; 24) sowie eine Feder (14; 25) aufweist, die den Ventilkörper (13, 16) in Richtung auf den Ventilsitz (27; 24) oder umgekehrt mindestens bei durchströmtem Ventil mit einer Kraft beaufschlagt,
**dadurch gekennzeichnet**,
daß von außen betätigbare Einstelleinrichtungen (26, 29; 16, 30) vorgesehen und derart ausgebildet sind, daß die Kraft, mit welcher die Feder (14; 25) den Ventilkörper (13; 16) auf den Ventilsitz (27; 24) bei durchströmtem Ventil (4; 17) beaufschlagt, im wesentlichen beliebig einstellbar ist.

2. Schwingungsdämpfer nach Anspruch 1,
**dadurch gekennzeichnet**,
daß der Ventilkörper (13, 16) einen konischen Abschnitt (21) und einen an der großen Seite des konischen Abschnitts (21) angesetzten zylindrischen Abschnitt (20) aufweist, dessen Durchmesser (d2) geringer ist als der des Ventilsitzes (27'; 24).

3. Schwingungsdämpfer nach einem der vorhergehenden Ansprüche,
**dadurch gekennzeichnet**,
daß der Ventilkörper (13; 16) und/oder die Feder (14; 25) auswechselbar ist/sind.

4. Schwingungsdämpfer nach einem der vorhergehenden Ansprüche,
**dadurch gekennzeichnet**,
daß der Ventilkörper (13) gleitverschieblich auf einem Ventilzapfen (26) angeordnet ist, der einen Federsitz (15) trägt, an dem ein Ende der Feder (14) aufliegt, die mit ihrem anderen Ende am Ventilkörper (13) aufliegt, und daß der Ventilzapfen (26) in Richtung auf den Ventilkörper (13) vorzugsweise über ein Gewinde (29) verstellbar ist.

5. Schwingungsdämpfer nach einem der Ansprüche 1 bis 3,
**dadurch gekennzeichnet**,
daß der Ventilkörper (16) als Steuernadel ausgebildet ist, welche in Richtung auf den Ventilsitz (24) vorzugsweise über ein Gewinde (30) verstellbar ist, und daß der Ventilsitz (24) gleitverschieblich in einer Halterung (23) von der Feder (25) beaufschlagt gehalten ist.

6. Schwingungsdämpfer nach einem der vorhergehenden Ansprüche,
**gekennzeichnet durch**
ein Bypass-Ventil (5) zum Ventil (4), das einen von außen einstellbaren Strömungsquerschnitt aufweist.

7. Schwingungsdämpfer nach einem der vorhergehenden Ansprüche,
**dadurch gekennzeichnet**,
daß ein Drosselventil (6) vorgesehen ist, welches entweder in Serie zum Ventil (4) gegenbenenfalls mit seinem Bypass-Ventil (5) liegt, oder das in einem zweiten System, bestehend aus einem zweiten Kolben (2') und einem zweiten Zylinder (3') angeordnet ist, welches kräftemäßig parallel zum ersten System mit dem ersten Kolben (2) und ersten Zylinder (3) angeordnet ist.

8. Schwingungsdämpfer nach einem der vorhergehenden Ansprüche,
**dadurch gekennzeichnet**,
daß die Ventile (4, 5, 6, 17) auswechselbar angeordnet sind.

9. Schwingungsdämpfer nach einem der vorhergehenden Ansprüche,
**dadurch gekennzeichnet**,
daß für jedes der Ventile (4, 5, 6, 17) mehrere auswechselbare Konusteile mit unterschiedlichen Durchflußcharakteristiken vorhanden sind.

10. Vorrichtung nach einem der vorhergehenden Ansprüche,
**dadurch gekennzeichnet**,
daß Einstelleinrichtungen, insbesondere Skalen oder dergleichen vorgesehen und derart angebracht sind, daß die Einstellwerte der Ventile (4, 5, 6, 17) von außen ablesbar sind.
